(19) Europäisches Patentamt
European Patent Office
Office européen des brevets

(11) EP 2 778 194 A1

(12) **EUROPEAN PATENT APPLICATION**
published in accordance with Art. 153(4) EPC

(43) Date of publication:
**17.09.2014 Bulletin 2014/38**

(21) Application number: **12848571.1**

(22) Date of filing: **07.11.2012**

(51) Int Cl.:
***C08J 9/28*** (2006.01) ***C08F 8/32*** (2006.01)

(86) International application number:
**PCT/JP2012/078837**

(87) International publication number:
**WO 2013/069681 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2011 JP 2011244171**

(71) Applicant: **Kaneka Corporation**
**Osaka-shi, Osaka 530-8288 (JP)**

(72) Inventors:
- **UYAMA Hiroshi**
  **Suita-shi**
  **Osaka 565-0871 (JP)**
- **MIO Wataru**
  **Takasago-shi**
  **Hyogo 676-8688 (JP)**
- **HIRAI Yusuke**
  **Takasago-shi**
  **Hyogo 676-8688 (JP)**
- **FUKE Kazuhiro**
  **Suita-shi**
  **Osaka 565-0871 (JP)**

(74) Representative: **Vossius & Partner**
**Siebertstrasse 4**
**81675 München (DE)**

(54) **VINYL CHLORIDE-BASED COPOLYMER POROUS BODY AND METHOD FOR PRODUCING SAME**

(57) A vinyl chloride-based copolymer porous body contains a vinyl chloride-based copolymer as the main component. The vinyl chloride-based copolymer porous body has continuous pores having a pore size of 0.1 to 40 μm, the pores have a skeletal diameter of 0.1 to 20 μm, and the vinyl chloride-based copolymer has a thickness of 1 mm or more. Such a vinyl chloride-based copolymer porous body can be produced by a production method including the steps of heating and dissolving the vinyl chloride-based copolymer in a solvent to obtain a vinyl chloride-based copolymer solution; cooling the vinyl chloride-based copolymer solution to obtain a precipitated product; and separating and drying the product to obtain a porous body containing the vinyl chloride-based copolymer as the main component.

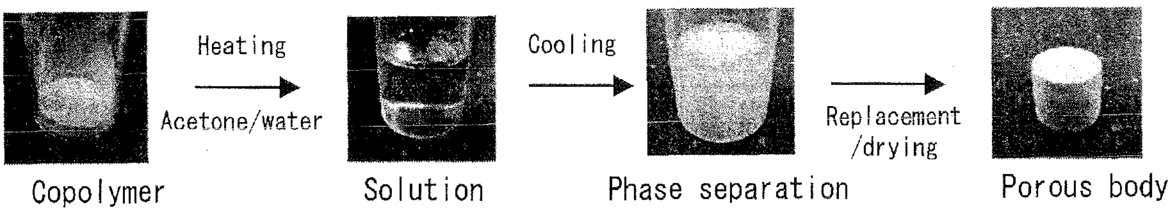


FIG. 1

EP 2 778 194 A1

## Description

### Technical Field

The present invention relates to a vinyl chloride-based copolymer porous body and a method for producing the vinyl chloride-based copolymer porous body.

### Background Art

Porous bodies are widely used in a variety of fields as separating agents, adsorbents, etc. As for inorganic porous bodies, extensive researches have been carried out on silica-based porous bodies, and techniques to produce porous silica particles among silica-based porous bodies have been generally researched. Such porous silica particles are in practical use as analytical materials. On the other hand, with regard to polymeric porous bodies, techniques to obtain porous body particles by adding a suitable diluting agent daring suspension polymerization of a vinyl monomer are known. Taking advantage of lightweight properties of polymeric materials, such polymeric porous bodies are in practical use as a variety of adsorbents and separating agents.
A mass of a material, having a complex structure composed of a continuous skeleton and voids is called a monolith. As for silica-based porous bodies, a technique to produce a monolith as a product having a certain thickness is known. In regard to polymeric porous bodies, a synthesizing technique using polymerization has been reported for a vinyl polymer monolith, but it is not yet in practical use because it is not easy to control the structure.
As a polymeric material, vinyl chloride-based copolymers have been used as materials for fibers, and the like. Vinyl chloride-based copolymers have excellent chemical resistance, acid resistance, alkali resistance and flame retardancy. As a porous body using such a vinyl chloride-based copolymer as a material, a gel porous sheet is known, which is obtained by wet paper making using a vinyl chloride-based copolymer (e.g., Patent Document 1).
However, porous bodies obtained by such a well-known technique are, for example, fibers, and no method for producing a porous body containing a vinyl chloride-based copolymer as the main component has been known.

### Prior Art Document

### Patent Document

Patent Document 1: JP H11-273452 A

### Disclosure of Invention

### Problem to be Solved by the Invention

With the foregoing in mind, it is an object of the present invention to provide a vinyl chloride-based copolymer porous body and a method for producing the vinyl chloride-based copolymer porous body.

### Means for Solving Problem

The present invention is directed to a vinyl chloride-based copolymer porous body containing a vinyl chloride-based copolymer as the main component. The vinyl chloride-based copolymer porous body has continuous pores having a pore size of 0.1 to 40 μm, the pores have a skeletal diameter of 0.1 to 20 μm, and the vinyl chloride-based copolymer porous body has a thickness of 1 mm or more. Since such a porous body uses a vinyl chloride-based copolymer as a material, the porous body has excellent chemical resistance, acid resistance, alkali resistance, and flame retardancy.
The vinyl chloride-based copolymer porous body of the present invention can be produced by, for example, the following production method of the present invention. However, the vinyl chloride-based copolymer porous body of the present invention is not limited to the one produced by the production method. The present invention is directed to a method for producing a vinyl chloride-based copolymer porous body, and the method includes the steps of heating and dissolving a vinyl chloride-based copolymer in a solvent (first solvent) to obtain a vinyl chloride-based copolymer solution; cooling the vinyl chloride-based copolymer solution to obtain a precipitated product; and immersing the product in another solvent (second solvent) to replace the solvent with the another solvent to obtain a vinyl chloride-based copolymer porous body that is monolithic, has a thickness of 1 mm or more and contains the vinyl chloride-based copolymer. The solvent contains a poor solvent for the vinyl chloride-based copolymer and a good solvent for the vinyl chloride-based copolymer, the poor solvent is at least one selected from the group consisting of water, tetrahydrofurane, 1,4-dioxane, acetonitrile, ethylene glycol, methanol, ethanol, isopropanol, ethylene glycol, and glycerin, and the good

solvent is at least one selected from the group consisting of acetone, dimethyl sulfoxide, dimethyl formamide, dimethyl acetamide, and N-methylpyrrolidone.

Effects of the Invention

According to the present invention, it is possible to provide a vinyl chloride-based copolymer porous body.

Brief description of the drawings

[FIG. 1] FIG. 1 is a diagram for explaining a method for producing the porous body of the present invention.
[FIG. 2] FIG. 2 is an SEM micrograph of a vinyl chloride-based copolymer porous body obtained in Example 1.
[FIG. 3(a)] FIG. 3(a) is an SEM micrograph of a porous body obtained in Example 2 at a cooling temperature of-18°C.
[FIG. 3(b)] FIG. 3(b) is an SEM micrograph of a porous body obtained in Example 2 at a cooling temperature of -196°C.
[FIG. 4(a)] FIG. 4(a) is an SEM micrograph of a porous body obtained in Example 3 at a vinyl chloride-based copolymer concentration of 80 mg/mL.
[FIG. 4(b)] FIG. 4(b) is an SEM micrograph of a porous body obtained in Example 3 at a vinyl chloride-based copolymer concentration of 120 mg/mL.
[FIG. 5] FIG. 5 is an SEM micrograph of a porous body obtained in Example 4.
[FIG. 6] FIG. 6 is an SEM micrograph of a porous body obtained in Example 5.
[FIG. 7] FIG. 7 is an SEM micrograph of a porous body obtained in Example 6.
[FIG. 8(a)] FIG. 8(a) is an SEM micrograph of a porous body obtained in Example 7 at a vinyl chloride-based copolymer concentration of 90 mg/mL.
[FIG. 8(b)] FIG. 8(b) is an SEM micrograph of a porous body obtained in Example 7 at a vinyl chloride-based copolymer concentration of 110 mg/mL.
[FIG. 9(a)] FIG. 9(a) is an SEM micrograph of a porous body obtained in Example 8 at a cooling temperature of -18°C.
[FIG. 9(b)] FIG. 9(b) is an SEM micrograph of a porous body obtained in Example 8 at a cooling temperature of -196°C.
[FIG. 10] FIG. 10 is an SEM micrograph of a porous body obtained in Example 9.
[FIG. 11] FIG. 11 is an IR spectrum of a vinyl chloride/acrylonitrile (VC/AN) copolymer-amidoxime porous body obtained in Example 9.
[FIG. 12] FIG. 12 is an SEM micrograph of a porous body obtained in Example 10.
[FIG. 13] FIG. 13 is an IR spectrum of a vinyl chloride/acrylonitrile (VC/AN) copolymer-amidoxime porous body obtained in Example 10.

Description of the Invention

One of the features of the porous body of the present invention is that the porous body is larger than fibers and films in thickness. The shape of the porous body is not limited. Of the three directions of the porous body, i.e., the length, the width, and the height, the smallest direction is referred to as the thickness for the sake of convenience. The porous body of the present invention has a thickness of, for example, 1 mm or more, preferably 1.5 mm or more, and more preferably 2 mm or more.
The term vinyl chloride-based copolymer as used herein refers to a polymer containing a vinyl chloride-based monomer as the main component in an amount of, for example, 30 wt% or more and 70 wt% or less, preferably 40 wt% or more and 60 wt% or less, and more preferably 45 wt% or more and 55 wt% or less in terms of improving the chemical resistance, acid resistance, alkali resistance and flame retardancy of the vinyl chloride-based copolymer porous body. The vinyl chloride-based monomer is preferably, for example, vinyl chloride, vinylidene chloride or the like, because vinyl chloride and vinylidene chloride have excellent general versatility and ease of handling. The vinyl chloride-based copolymer may contain acrylonitrile as another monomer, and monomers other than acrylonitrile as additional components. The vinyl chloride-based copolymer may contain acrylonitrile in an amount of, for example, 30 wt% or more and 70 wt% or less, preferably 40 wt% or more and 60 wt% or less, and more preferably 45 wt% or more and 55 wt% or less. Additional components are not limited as long as they can be copolymerized with the vinyl chloride-based monomer and acrylonitrile and are monomers other than the vinyl chloride-based monomer and acrylonitrile. Examples of additional components include acrylic acid, acrylate, methacrylic acid, methacrylate, acrylamide, methacrylamide, vinyl acetate, vinyl sulfonic acid, vinyl sulfonate, methallylsulfonic acid, methallylsulfonate, styrene sulfonic acid, styrene sulfonate, 2-acrylamide-2-methylsulfonic acid, and salt of 2-acrylamide-2-methylsulfonic acid, and methyl acrylate, vinyl acetate and the like are preferred. As additional components, one or more monomers can be used. The vinyl chloride-based copolymer may contain additional components in an amount of, for example, 0 wt% or more and 10 wt% or less, preferably 0 wt%

or more and 5 wt% or less, and more preferably 0 wt% or more and 3 wt% or less. The vinyl chloride-based copolymer can be produced by polymerization, such as emulsion polymerization, suspension polymerization, or solution polymerization, of the vinyl chloride-based monomer, another monomer, and optionally, additional components. Of the polymerization methods mentioned, emulsion polymerization is preferred in terms of a narrow molecular weight distribution, ease of controlling the molecular weight, and ease of obtaining a high molecular weight copolymer. The molecular weight of the vinyl chloride-based copolymer is not limited but is, for example, 10,000 to 200,000, preferably 20,000 to 180,000, and more preferably 30,000 to 160,000 in number-average molecular weight.

As described above, in the production method of the present invention, the vinyl chloride-based copolymer is heated and dissolved in a solvent (first solvent) to obtain a vinyl chloride-based copolymer solution. The heating temperature is, for example, 30 to 95°C, and preferably 35 to 90°C. A physical stimulus may be applied to the vinyl chloride-based copolymer when dissolving the copolymer in the solvent. Examples of the physical stimulus include stirring, shaking, and ultrasonication.

As described above, the solvent (first solvent) contains a poor solvent for the vinyl chloride-based copolymer and a good solvent for the vinyl chloride-based copolymer. The poor solvent for the vinyl chloride-based copolymer and the good solvent for the vinyl chloride-based copolymer may be each a mixture of one or more solvents. The term poor solvent as used herein refers to a solvent that is less capable of dissolving the vinyl chloride-based copolymer. Specifically, the poor solvent means that 1 g or more, preferably 0.8 g or more, and more preferably 0.5 g or more of the vinyl chloride-based copolymer does not dissolve in 1L of the poor solvent. The term good solvent as used herein refers to a solvent that is highly capable of dissolving the vinyl chloride-based copolymer. Specifically, the good solvent means that 10 g or more, preferably 15 g or more, and more preferably 20 g or more of the vinyl chloride-based copolymer dissolves in 1L of the good solvent. The poor solvent for the vinyl chloride-based copolymer is, for example, at least one selected from the group consisting of water, tetrahydrofurane, 1,4-dioxane, acetonitrile, ethylene glycol, methanol, ethanol, isopropanol, ethylene glycol and glycerin, and preferably is at least one selected from the group consisting of water, tetrahydrofurane, 1,4-dioxane, acetonitrile, and ethylene glycol. Further, the good solvent for the vinyl chloride-based copolymer is, for example, at least one selected from the group consisting of acetone, dimethyl sulfoxide, dimethyl formamide, dimethyl acetamide and N-methylpyrolidone, and preferably is at least one selected from the group consisting of dimethyl sulfoxide and dimethyl formamide. An exemplary combination of the good and poor solvents may be acetone and water and tetrahydrofurane.

The solvent (first solvent) when being 100 vol% has a good solvent content of, for example, 15 to 85 vol%, preferably 20 to 80 vol%, and more preferably 25 to 75 vol%. When the poor solvent is a combination of water and a poor solvent other than water (at least one selected from the group consisting of tetrahydrofurane, 1,4-dioxane, acetonitrile, ethylene glycol, methanol, ethanol, isopropanol, ethylene glycol and glycerin), the ratio of water : poor solvent other than water is preferably $5X - 0.7 < Y < 5X - 0.5$ (wherein, X is the relative volume of water where the volume of acetone is 1, and Y is the relative volume of the poor solvent other than water where the volume of acetone is 1). When the combination of the poor solvent and the good solvent is a combination of acetone (good solvent) and water and tetrahydrofurane (poor solvents), the ratio (volume) of water : tetrahydrofurane is preferably 1 : 1.5 to 5. Further, when the combination of the poor solvent and the good solvent is a combination of acetone (good solvent) and water and tetrahydrofurane (poor solvents) and the amount (volume) of acetone is 1, the ratio (volume) of water : tetrahydrofurane is preferably 1 : 1.5 to 5. The ratio (volume) of acetone : water : tetrahydrofurane is preferably 1 : 0.2 to 0.4 : 0.4 to 1.4, and particularly preferably 1 : 0.2 : 0.4, 1 : 0.3 : 0.9, or 1 : 0.4 : 1.4. When the combination of the poor solvent and the good solvent is a combination of acetone (good solvent) and water and 1,4-dioxane (poor solvents), the ratio (volume) of water : 1,4-dioxane is preferably 1:1 to 8. Further, when the combination of the poor solvent and the good solvent is a combination of acetone (good solvent) and water and 1,4-dioxane (poor solvents) and the amount of acetone is 1 (volume), the ratio (volume) of water : 1,4-dioxane is preferably 1 : 1 to 8.

The vinyl chloride-based copolymer concentration in the vinyl chloride-based copolymer solution is, for example, 40 to 300 mg/mL, preferably 50 to 200 mg/mL, and more preferably 60 to 200 mg/mL.

In the production method of the present invention, next, the vinyl chloride-based copolymer solution is cooled to obtain a precipitated product. The cooling temperature is, for example, -20 to 60°C, preferably 15 to 45°C, and more preferably 15 to 40°C. The cooling time is, for example, 1 minute to 24 hours, preferably 1 minute to 1.5 hours, and more preferably 2 minutes to 1 hour.

In the production method of the present invention, next, the product is immersed in another solvent (second solvent) to replace the solvent (first solvent) with the another solvent (second solvent) to obtain a porous body containing the vinyl chloride-based copolymer as the main component.

The another solvent (second solvent) is preferably at least one selected from the group consisting of water, lower alcohols, and acetonitrile, and more preferably water, methanol, and acetonitrile. Examples of the lower alcohols include $C_{1-6}$ lower alcohols such as methanol, ethanol, n-propanol, i-propanol, n-butanol, 2-butanol, i-butanol, t-butanol, n-pentanol, t-amyl alcohol, and n-hexanol.

The production method of the present invention is, for example, a method for producing a porous body containing

a vinyl chloride-based copolymer as the main component and having a thickness of 1 mm or more. The method includes the steps of

heating at 30 to 95°C and dissolving the vinyl chloride-based copolymer in a solvent to obtain a vinyl chloride-based copolymer solution;
cooling the vinyl chloride-based copolymer solution at -20 to 60°C for 1 minute to 24 hours to obtain a precipitated product; and
immersing the product in another solvent to replace the solvent with the another solvent to obtain a porous body containing the vinyl chloride-based copolymer as the main component,
wherein the solvent contains a poor solvent for the vinyl chloride-based copolymer and a good solvent for the vinyl chloride-based copolymer,
the poor solvent is at least one selected from the group consisting of water, tetrahydrofurane, 1,4-dioxane, acetonitrile, ethylene glycol, methanol, ethanol, isopropanol, ethylene glycol, and glycerin, and
the good solvent is at least one selected from the group consisting of acetone, dimethyl sulfoxide, dimethyl formamide, dimethyl acetamide, and N-methylpyrrolidone.

After replacing the solvent (first solvent) with the another solvent (second solvent), the product obtained may be dried to obtain the porous body. The drying is carried out at, for example, 0 to 90°C, and preferably 0 to 80°C. For example, the drying is carried out under a reduced pressure to a normal pressure, preferably under a reduced pressure. The drying may be freeze drying.

As described above, the porous body of the present invention contains the vinyl chloride-based copolymer as the main component, the porous body has continuous pores having a pore size of 0.1 to 40 μm, the pores have a skeletal diameter of 0.1 to 20 μm, and the porous body has a thickness of 1 mm or more. Such a porous body can be used as, for example, a filter, an adsorbent, etc. The pore size and the skeletal diameter can be determined from images taken with a scanning electron microscope. Note that the porous body containing the vinyl chloride-based copolymer as the main component means that the vinyl chloride-based copolymer accounts for, for example, 85 wt% or more, preferably 90 wt% or more, and more preferably 92 wt% or more of the component polymer of the porous body. Such a porous body has excellent chemical resistance, acid resistance, alkali resistance, and flame retardancy.

The present invention is also directed to an amidoxime-modified vinyl chloride-based copolymer porous body (hereinafter may also be referred to as a "vinyl chloride-based copolymer-amidoxime porous body") obtained by reacting the vinyl chloride-based copolymer porous body of the present invention with hydroxylamine to convert some of the nitrile groups of the vinyl chloride-based copolymer porous body into amidoxime groups.

In the amidoxime-modified vinyl chloride-based copolymer porous body of the present invention, the vinyl chloride-based copolymer porous body is preferably obtained by a method including the steps of

heating and dissolving a vinyl chloride-based copolymer in a solvent to obtain a vinyl chloride-based copolymer solution;
cooling the vinyl chloride-based copolymer solution to obtain a precipitated product; and
immersing the product in another solvent to replace the solvent with the another solvent to obtain a vinyl chloride-based copolymer porous body that is monolithic, has a thickness of 1 mm or more and contains the vinyl chloride-based copolymer as the main component,
wherein the solvent contains a poor solvent for the vinyl chloride-based copolymer and a good solvent for the vinyl chloride-based copolymer,
the poor solvent is at least one selected from the group consisting of water, tetrahydrofurane, 1,4-dioxane, acetonitrile, ethylene glycol, methanol, ethanol, isopropanol, ethylene glycol, and glycerin, and
the good solvent is at least one selected from the group consisting of acetone, dimethyl sulfoxide, dimethyl formamide, dimethyl acetamide, and N-methylpyrrolidone.

In one preferred amidoxime-modified vinyl chloride-based copolymer porous body of the present invention, the vinyl chloride-based copolymer porous body is obtained by a method including the steps of:

heating and dissolving a vinyl chloride-based copolymer in a solvent to obtain a vinyl chloride-based copolymer solution;
cooling the vinyl chloride-based copolymer solution to obtain a precipitated product; and
immersing the product in another solvent to replace the solvent with the another solvent to obtain a vinyl chloride-based copolymer porous body that is monolithic, has a thickness of 1 mm or more and contains the vinyl chloride-based copolymer as the main component,
wherein the solvent contains a poor solvent for the vinyl chloride-based copolymer and a good solvent for the vinyl

chloride-based copolymer,
the poor solvent is at least one selected from the group consisting of water, tetrahydrofurane, 1,4-dioxane, acetonitrile, ethylene glycol, methanol, ethanol, isopropanol, ethylene glycol, and glycerin,
the good solvent is at least one selected from the group consisting of acetone, dimethyl sulfoxide, dimethyl formamide, dimethyl acetamide, and N-methylpyrrolidone, and
the solvent when being 100 vol% has a good solvent content of preferably 15 to 85 vol%, more preferably 20 to 80 vol%, and even more preferably 25 to 75 vol%.

In one preferred amidoxime-modified vinyl chloride-based copolymer porous body of the present invention, the vinyl chloride-based copolymer porous body is obtained by a method including the steps of:

heating and dissolving a vinyl chloride-based copolymer in a solvent to obtain a vinyl chloride-based copolymer solution;
cooling the vinyl chloride-based copolymer solution to obtain a precipitated product; and
immersing the product in another solvent to replace the solvent with the another solvent to obtain a vinyl chloride-based copolymer porous body that is monolithic, has a thickness of 1 mm or more and contains the vinyl chloride-based copolymer as the main component,
wherein the solvent contains a poor solvent for the vinyl chloride-based copolymer and a good solvent for the vinyl chloride-based copolymer,
the poor solvent is a combination of water and tetrahydrofurane,
the good solvent is acetone, and
the ratio (volume) of water : tetrahydrofurane is 1 : 1.5 to 5, and preferably the ratio (volume) of acetone : water: tetrahydrofurane is 1 : 0.2 to 0.4 : 0.4 to 1.4.

In one preferred amidoxime-modified vinyl chloride-based copolymer porous body of the present invention, the vinyl chloride-based copolymer porous body is obtained by a method including the steps of:

heating and dissolving a vinyl chloride-based copolymer in a solvent to obtain a vinyl chloride-based copolymer solution;
cooling the vinyl chloride-based copolymer solution to obtain a precipitated product; and
immersing the product in another solvent to replace the solvent with the another solvent to obtain a vinyl chloride-based copolymer porous body that is monolithic, has a thickness of 1 mm or more and contains the vinyl chloride-based copolymer as the main component,
wherein the solvent contains a poor solvent for the vinyl chloride-based copolymer and a good solvent for the vinyl chloride-based copolymer,
the poor solvent is a combination of water and 1,4-dioxane,
the good solvent is acetone, and
the ratio (volume) of water : 1,4-dioxane is 1 : 1 to 8.

The amidoxime-modified vinyl chloride-based copolymer porous body of the present invention is preferably an amidoxime-modified vinyl chloride-based copolymer porous body in which, for example, 2 to 98 mol%, preferably 3 to 97 mol%, and more preferably 5 to 95 mol% of the nitrile groups of the vinyl chloride-based copolymer porous body is amidoximized.

It is preferable that the amidoxime-modified vinyl chloride-based copolymer porous body of the present invention has pores having a pore size of 0.1 to 40 $\mu$m, the pores have a skeletal diameter of 0.1 to 20 $\mu$m, and the porous body has a thickness of 1 mm or more.

It is preferable that the amidoxime-modified vinyl chloride-based copolymer porous body of the present invention satisfies the following formula in the infrared absorption spectrum. The peak of the infrared absorption spectrum at 2262 $cm^{-1}$ is a peak of nitrile groups of the vinyl chloride-based copolymer, and the peak of the infrared absorption spectrum at 1652 $cm^{-1}$ is a peak of amidoxime groups of the amidoxime-modified vinyl chloride-based copolymer. Thus, (B) / (A) represents a relative ratio between the nitrile groups and the amidoxime groups of the amidoxime-modified vinyl chloride-based porous body. The larger the ratio, the higher the degree of amidoxime modification is. For example, (B) / (A) is 1.2 or more and 800 or less, where (A) represents the peak height of the infrared absorption spectrum of the amidoxime-modified vinyl chloride-based copolymer porous body at 2262 $cm^{-1}$, and (B) represents the peak height of the infrared absorption spectrum of the amidoxime-modified vinyl chloride-based copolymer porous body at 1652 $cm^{-1}$. (B) / (A) above is more preferably $1.5 \leq (B) / (A) \leq 500$.

The amidoxime-modified vinyl chloride-based copolymer porous body of the present invention is an amidoxime-modified vinyl chloride-based copolymer porous body for adsorbing a metal ion, preferably an ion of metal such as

copper (e.g., copper(II) ion), iron (e.g., iron(II) ion), nickel (e.g., nickel(II) ion), vanadium (e.g., vanadium(V) ion), indium, gallium, mercury, silver, lead, uranium, plutonium, cesium, barium, lanthanum, thallium and strontium, and an iodine ion and iodine. An adsorption amount of metal ion and iodine ion per g of the amidoxime-modified vinyl chloride-based copolymer porous body of the present invention is, for example, 0.2 to 10 (ion mmol / g of porous body), and preferably 1 to 7 (ion mmol / g of porous body). Further, an adsorption amount of iodine per g of the amidoxime-modified vinyl chloride-based copolymer porous body is, for example, 0.2 to 10 (iodine mmol / g of porous body), and preferably 1 to 7 (iodine mmol / g of porous body).

According to the present invention, also provided is a column for adsorbing a metal ion, preferably an ion of metal selected from the group consisting of copper (e.g., copper(II) ion), iron (e.g., iron(II) ion), nickel (e.g., nickel(II) ion), vanadium (e.g., vanadium(V) ion), indium, gallium, mercury, silver, lead, uranium, plutonium, cesium, barium, lanthanum, thallium and strontium, and an iodine ion and iodine, the column being filled with the amidoxime-modified vinyl chloride-based copolymer porous body of the present invention.

Further, the present invention is also directed to a metal adsorption method for adsorbing a metal ion, preferably an ion of metal selected from the group consisting of copper (e.g., copper(II) ion), iron (e.g., iron(II) ion), nickel (e.g., nickel(II) ion), vanadium (e.g., vanadium(V) ion), indium, gallium, mercury, silver, lead, uranium, plutonium, cesium, barium, lanthanum, thallium, and strontium, and an iodine ion and iodine, the metal adsorption method using the amidoxime-modified vinyl chloride-based copolymer porous body of the present invention. An adsorption amount of metal ion and iodine ion per g of the amidoxime-modified vinyl chloride-based copolymer porous body of the present invention is, for example, 0.05 to 10 (ion mmol / g of porous body), and preferably 0.1 to 8 (ion mmol / g of porous body). Further, an adsorption amount of iodine per g of the amidoxime-modified vinyl chloride-based copolymer porous body is, for example, 0.05 to 10 (iodine mmol / g of porous body), and preferably 0.1 to 8 (iodine mmol / g of porous body).

As described above, the method for producing the amidoxime-modified vinyl chloride-based copolymer porous body of the present invention includes the step of reacting the vinyl chloride-based copolymer porous body of the present invention with hydroxylamine to convert the nitrile groups of the vinyl chloride-based copolymer porous body into amidoxime groups. In this step, for example, hydroxylamine is used in an amount of 0.05 to 10 equivalents, and preferably 0.1 to 6 equivalents to the nitrile groups in the vinyl chloride-based copolymer porous body. When hydroxylamine is in the form of a salt, it is preferable that hydroxylamine is first neutralized and then is used in the form of free amine in this step. This step can be carried out by mixing the vinyl chloride-based copolymer with hydroxylamine in a solvent, and heating the mixture at 40 to 100°C for 1 to 24 hours, for example. As the solvent, alcohol such as methanol or ethanol can be used. After the heating, the vinyl chloride-based copolymer-amidoxime porous body obtained may be cleaned by shaking the porous body in, for example, water or alcohol such as methanol or ethanol. Further, after being heated and/or cleaned, the vinyl chloride-based copolymer-amidoxime porous body obtained may be dried at a temperature such as room temperature under a normal pressure, in a vacuum or the like.

The amidoxime-modified vinyl chloride-based copolymer porous body of the present invention is monolithic, and it is larger than films in thickness. The shape of the porous body is not limited. Of the three directions of the porous body, i.e., the length, the width, and the height, the smallest direction is referred to as the thickness for the sake of convenience. As described above, the amidoxime-modified vinyl chloride-based copolymer porous body of the present invention has a thickness of 1 mm or more, preferably 1.5 mm or more, and more preferably 2 mm or more. Such a porous body has excellent chemical resistance, acid resistance, alkali resistance, and flame retardancy.

The amidoxime-modified vinyl chloride-based copolymer porous body of the present invention has pores having a pore size of 0.1 to 40 μm, the pores have a skeletal diameter of 0.1 to 20 μm, and the porous body has a thickness of 1 mm or more. The pore size is preferably 0.2 to 35 μm, and more preferably 0.3 to 30 μm. The skeletal diameter of the pores is preferably 0.15 to 18 μm, and more preferably 0.2 to 15 μm. The thickness of the porous body is preferably 1.2 mm or more, and more preferably 1.5 mm or more.

It is preferable that the vinyl chloride-based copolymer-amidoxime porous body has pores having a pore size of 0.1 to 40 μm, the pores have a skeletal diameter of 0.1 to 20 μm, and the porous body has a thickness of 1 mm or more. The pore size is preferably 0.2 to 35 μm, and more preferably 0.3 to 30 μm. The skeletal diameter of the pores is preferably 0.15 to 18 μm, and more preferably 0.2 to 15 μm. The thickness of the porous body is preferably 1.2 mm or more and more preferably 1.5 mm or more.

Such a porous body can be used as, for example, a filter, an adsorbent, etc. The pore size and the skeletal diameter can be determined from images taken with a scanning electron microscope.

The present invention will be described in more detail below by way of Examples, but the scope of the present invention is not limited to the Examples below. The following abbreviations are used herein.

VDC: vinylidene chloride
VC: vinyl chloride
AN: acrylonitrile
THF: tetrahydrofurane

DMF: dimethyl formamide

The following measuring instruments were used herein.

Scanning electron microscope: Hitachi S-3000N (manufactured by Hitachi High-Technologies Corporation)
BET: Micromeritics Tristan-3000 (manufactured by Shimadzu Corporation)
ICP emission spectrometry: trade name: ICPS-7510 (manufactured by Shimadzu Corporation)
Infrared spectrometer: trade name: Spectrum One FT-IR Fourier transform infrared spectrometer (manufactured by PerkinElmer Japan Co., Ltd)

Herein, the pore size and the skeletal diameter were determined from images taken with a scanning electron microscope (SEM).

A vinylidene chloride/acrylonitrile copolymer having a number-average molecular weight of 140,000 and a vinyl chloride/acrylonitrile copolymer having a number-average molecular weight of 43,000 were produced in the following manners. The acrylonitrile content and the number-average molecular weight of these copolymers were measured in the following manners.

[Measurement of Acrylonitrile Content of Polymers]

The nitrogen content of each polymer was measured using a CHN coder JM10 from J-SCIENCE LAB Co., Ltd., and then the acrylonitrile content of each polymer was calculated, given that the nitrogen content was derived from acrylonitrile.

[Measurement of Molecular Weight of Polymers]

The average molecular weight was measured using a GPC device HLC-8120GPC from Tosoh Corporation, wherein DMF was used as a solvent and polystyrene was used as a standard sample.

<Production Example 1: Production of Vinylidene Chloride/Acrylonitrile Copolymer>

Into a 14L polymerization reaction vessel with a stirrer, 1.1 parts by weight of sodium dodecyl sulfate, 0.002 parts by weight of ferrous sulfate ($FeSO_4 \cdot 7H_2O$), 0.25 parts by weight of sulfuric acid, 0.76 parts by weight of sodium hydrogen sulfite, 0.03 parts by weight of 2-mercaptoethanol, 185 parts by weight of ion exchange water (pH=5.5), 12.5 parts by weight of acrylonitrile, and 5.0 parts by weight of vinylidene chloride were placed, and the temperature of the vessel was raised to 55°C. The polymerization temperature was maintained at 55°C while stirring the contents, and 40.0 parts by weight of acrylonitrile, 43.0 parts by weight of vinylidene chloride, 0.5 parts by weight of sodium styrenesulfonate dissolved in 15 parts by weight of ion exchange water, and 0.05 parts by weight of ammonium persulfate dissolved in 8 parts by weight of ion exchange water were added to the polymerization reaction vessel over 6 hours, thus obtaining a polymer latex. The amount of the final reaction liquid was adjusted to 10L. The polymer latex was salted out, heated, dewatered and dried by general methods, thus obtaining a vinylidene chloride/acrylonitrile-based copolymer. At the reaction rate of 99.3 wt%, vinylidene chloride was 48.0 wt%, the acrylonitrile content was 51.5 wt% and the number-average molecular weight was 140,000.

<Production Example 2: Production of Vinyl Chloride/Acrylonitrile Copolymer>

Into a 14L polymerization reaction vessel with a stirrer, 0.9 parts by weight of sodium dodecyl sulfate, 0.001 parts by weight of ferrous sulfate ($FeSO_4 \cdot 7H_2O$), 0.25 parts by weight of sulfuric acid, 1.0 part by weight of sodium hydrogen sulfite, 170 parts by weight of ion exchange water (pH=5.5), 4.5 parts by weight of acrylonitrile and 54.3 parts by weight of vinyl chloride were placed, and the temperature of the vessel was raised to 50°C. The polymerization temperature was maintained at 50°C while stirring the contents, and 42.0 parts by weight of acrylonitrile, 0.5 parts by weight of sodium styrenesulfonate dissolved in 15 parts by weight of ion exchange water, and 0.27 parts by weight of ammonium persulfate dissolved in 20 parts by weight of ion exchange water were added to the polymerization reaction vessel over 4.5 hours, thus obtaining a polymer latex. The amount of the final reaction liquid was adjusted to 10L. The polymer latex was salted out, heated, dewatered and dried by general methods, thus obtaining a vinyl chloride/acrylonitrile copolymer. At the reaction rate of 92.3 wt%, vinyl chloride was 50.1 wt%, the acrylonitrile content was 49.4 wt% and the number-average molecular weight was 43,000.

<Measurement of BET Specific Surface Area>

Porous bodies obtained in Examples were degassed in a nitrogen stream at 60°C for 40 minutes using a sample degassing apparatus, and then their specific surface areas were measured by the BET three-point method.

Example 1

The VDC/AN copolymer (vinylidene chloride : acrylonitrile = 48.0 wt% : 51.5 wt%; number-average molecular weight Mn = 140,000; produced in Production Example 1) was added to a mixed solvent of acetone/water/THF (volume ratio: 1/0.3/0.9) at a concentration of 100 g/mL, and they were stirred at 40°C. After complete dissolution, a stirrer bar was taken out, and the solution was left to stand still for 30 minutes at 20°C. Phase separation occurred after cooling, thus giving a product having the shape of a sample tube (cylindrical shape) (see FIG. 1). This product was immersed in methanol (another solvent) and shaken in a bioshaker at 20°C for 24 hours. Methanol was changed 3 times within 24 hours to replace the acetone/water/THF solvent with methanol. Thereafter, drying was carried out under a reduced pressure at room temperature for 6 hours to remove methanol, thus giving a VDC/AN copolymer porous body (dimensions: a substantially cylindrical shape having a diameter of 8.5 mm and a thickness of 7.0 mm).

<SEM Observation>

Sputtering was performed on the VDC/AN copolymer porous body obtained for 150 s at a discharge current of 15.0 mA, and then SEM observation was carried out at an applied voltage of 15.0 kV to 25.0 kV

FIG. 2 shows an SEM micrograph of the VDC/AN copolymer porous body obtained. As shown in FIG. 2, it was confirmed that the VDC/AN copolymer porous body was a porous body having a co-continuous structure, with the skeletal diameter being 0.42 to 1.14 μm and the pore size being 0.57 to 1.43 μm. Note that it was possible to infer that the pores had a co-continuous structure due to the fact that the shapes of the pores were identical or similar on SEM micrographs of multiple porous body samples.

[Reference Examples 1 to 13]

Reference Examples 1 to 13 were conducted in the same manner as in Example 1 except for changing the ratio of acetone/water/THF (volume ratio: 1/0.3/0.9) in the mixed solvent to those shown in Table 1. Table 1 provides the conditions of the mixtures after stirring at 40°C and after cooling.

[TABLE 1]

| | Mixed solvent ratio (volume) | | | Condition of mixture after stirring at 40°C | Condition of mixtures after cooling |
|---|---|---|---|---|---|
| | Acetone | Water | THF | | |
| Ref. Ex. 1 | 1 | 0.1 | 0 | solution | solution |
| Ref. Ex. 2 | 1 | 0.2 | 0 | insoluble matter present | - |
| Ref. Ex. 3 | 1 | 0.2 | 0.3 | insoluble matter present | - |
| Ref. Ex. 4 | 1 | 0.2 | 0.6 | solution | solution |
| Ref. Ex. 5 | 1 | 0.3 | 0 | insoluble matter present | - |
| Ref. Ex. 6 | 1 | 0.3 | 0.3 | insoluble matter present | - |
| Ref. Ex. 7 | 1 | 0.3 | 0.6 | insoluble matter present | - |
| Ex 1 | 1 | 0.3 | 0.9 | solution | phase separation |
| Ref. Ex. 8 | 1 | 0.4 | 0 | insoluble matter present | - |
| Ref. Ex. 9 | 1 | 0.4 | 0.3 | insoluble matter present | - |
| Ref. Ex. 10 | 1 | 0.4 | 0.6 | insoluble matter present | - |
| Ref. Ex. 11 | 1 | 0.4 | 0.9 | insoluble matter present | - |
| Ref. Ex0 12 | 1 | 0.4 | 1.2 | insoluble matter present | - |

(continued)

| | Mixed solvent ratio (volume) | | | Condition of mixture after stirring at 40°C | Condition of mixtures after cooling |
|---|---|---|---|---|---|
| | Acetone | Water | THF | | |
| Ref. Ex. 13 | 1 | 0.4 | 1.5 | solution | solution |

As can be seen from Table 1, in Reference Examples 1 to 13, no phase separation occurred and no porous body was obtained.

Example 2

Porous bodies (the dimensions of the porous body obtained at a cooling temperature of -18°C a substantially cylindrical shape having a diameter of 9 mm and a thickness of 7 5 mm, with the skeletal diameter being 0 29 to 0 86 μm and the pore size being 0 86 to 2 00 μm, the dimensions of the porous body obtained at a cooling temperature of -196°C: a substantially cylindrical shape having a diameter of 9 mm and a thickness of 7 5 mm, with the skeletal diameter being 0.17 to 0 29 μm and the pore size being 0 29 to 0.86 μm; in each case, VDC/AN accounted for 100 wt% of the component polymer of the porous body) were obtained in the same manner as in Example 1 except for changing the cooling temperature to -18°C or -196°C from 20°C FIG. 3(a) shows an SEM micrograph of the porous body obtained at a cooling temperature of -18°C, and FIG. 3(b) shows an SEM micrograph of the porous body obtained at a cooling temperature of -196°C. It was confirmed that the higher the cooling temperature, the larger the skeletal diameter of the porous body obtained became.

Example 3

Porous bodies (the dimensions of the porous body obtained at a VDC/AN concentration of 80 mg/mL: a substantially cylindrical shape having a diameter of 8.5 mm and a thickness of 7.0 mm, with the skeletal diameter being 0.57 to 1.43 μm and the pore size being 0.86 to 2.23 μm; the dimensions of the porous body obtained at a VDC/AN concentration of 120 mg/mL: a substantially cylindrical shape having a diameter of 9.0 mm and a thickness of 8.5 mm, with the skeletal diameter being 0.23 to 0.42 μm and the pore size being 0.43 to 1.14 μm; in each case, VDC/AN accounted for 100 wt% of the component polymer of the porous body) were obtained in the same manner as in Example 1 except for changing the VDC/AN concentration to 80 mg/mL or 120 mg/mL and the cooling temperature to -18°C from 20°C. FIG. 4(a) shows an SEM micrograph of the porous body obtained at a VDC/AN concentration of 80 mg/mL, and FIG. 4(b) shows an SEM micrograph of the porous body obtained at a VDC/AN concentration of 120 mg/mL. As shown in FIGS. 4(a) and (b), it was confirmed that the higher the polymer concentration, the smaller the skeletal diameter of the porous body obtained became.

Example 4

A porous body (a substantially cylindrical shape having a diameter of 9.0 mm and a thickness of 8.0 mm, with the skeletal diameter being 1.28 to 5.56 μm, the pore diameter being 5.13 to 29.91 μm, and the BET specific surface area being 1.640 $m^2/g$; VC/AN accounted for 100 wt% of the component polymer of the porous body) was obtained in the same manner as in Example 1 except for changing the VDC/AN copolymer (vinylidene chloride : acrylonitrile = 48.0 wt% : 51.5 wt%, number-average molecular weight Mn = 140,000) to the VC/AN copolymer (vinyl chloride : acrylonitrile = 50.1 wt% : 49.4 wt%, number-average molecular weight Mn = 43,000, produced in Production Example 2) and the mixed solvent of acetone/water/THF (volume ratio: 1/0.3/0.9) to a mixed solvent of acetone/water/THF (volume ratio: 1/0.2/0.4). FIG. 5 shows an SEM micrograph of the porous body obtained.

Example 5

A porous body (a substantially cylindrical shape having a diameter of 10 mm and a thickness of 7.5 mm, with the skeletal diameter being 0.85 to 6.00 μm, and the pore diameter being 4.27 to 13.68 μm; VC/AN accounted for 100 wt% of the component polymer of the porous body) was obtained m the same manner as m Example 4 except for changing the mixed solvent of acetone/water/THF (volume ratio 1/0.2/0.4) to a mixed solvent of acetone/water/THF (volume ratio 1/0 3/0.9) FIG. 6 shows an SEM micrograph of the porous body obtained

Example 6

A porous body (a substantially cylindrical shape having a diameter of 11 5 mm and a thickness of 9.5 mm, with the skeletal diameter being 1.71 to 1111 μm, and the pore size being 11.11 to 3419 μm; VC/AN accounted for 100 wt% of the component polymer of the porous body) was obtained in the same manner as in Example 4 except for changing the mixed solvent of acetone/water/THF (volume ratio: 1/0.2/0.4) to a mixed solvent of acetone/water/THF (volume ratio' 1/0.4/1.4) FIG 7 shows an SEM micrograph of the porous body obtained

[Reference Examples 14 to 19]

Reference Examples 14 to 19 were conducted m the same manner as in Example 4 except for changing the ratio of acetone/water/THF (volume ratio 1/0.3/0.9) in the mixed solvent to those shown in Table 2. Table 2 provides the conditions of the mixtures after stirring at 40°C and after cooling.

[TABLE 2]

| | Mixed solvent ratio (volume) | | | Condition of mixture after stirring at 40°C | Condition of mixture after cooling |
|---|---|---|---|---|---|
| | Acetone | Water | THF | | |
| Ref. Ex. 14 | 1 | 0.1 | 0.3 | insoluble matter present | - |
| Ex. 4 | 1 | 0.2 | 0.4 | solution | Phase separation |
| Ref. Ex. 15 | 1 | 0.2 | 0.5 | solution | solution |
| Ref. Ex. 16 | 1 | 0.3 | 0.8 | insoluble matter present | - |
| Ex. 5 | 1 | 0.3 | 0.9 | solution | Phase separation |
| Ref. Ex. 17 | 1 | 0.3 | 1.0 | solution | solution |
| Ref. Ex. 18 | 1 | 0.4 | 1.3 | msoluble matter present | - |
| Ex. 6 | 1 | 0.4 | 1.4 | solution | Phase separation |
| Ref. Ex. 19 | 1 | 0.4 | 1.5 | solution | solution |

As can be seen from Table 2, in Reference Examples 14 to 19, no phase separation occurred and no porous body was obtained.

Example 7

Porous bodies (the dimensions of the porous body obtained at a VC/AN concentration of 90 mg/mL a substantially cylindrical shape having a diameter of 8 5 mm and a thickness of 7.5 mm, with the skeletal diameter being 2.56 to 7.69 μm and the pore size being 9.40 to 34.19 μm; the dimensions of the porous body obtained at a VC/AN concentration of 110 mg/mL: a substantially cylindrical shape having a diameter of 9.0 mm and a thickness of 8.5 mm, with the skeletal diameter being 0.68 to 2.56 μm and the pore size being 2.14 to 10.26 μm; in each case, VC/AN accounted for 100 wt% of the component polymer of the porous body) were obtained in the same manner as in Example 4 except for changing the VC/AN concentration to 90 mg/mL or 110 mg/mL. FIG. 8(a) shows an SEM micrograph of the porous body obtained at a VC/AN concentration of 90 mg/mL, and FIG. 8(b) shows an SEM micrograph of the porous body obtained at a VC/AN concentration of 110 mg/mL. It was confirmed that the higher the polymer concentration, the smaller the skeletal diameter of the porous body obtained became.

Example 8

Porous bodies (the dimensions of the porous body obtained at a cooling temperature of -18°C: a substantially cylindrical shape having a diameter of 9.5 mm and a thickness of 9.0 mm, with the skeletal diameter being 0.51 to 1.28 μm and the pore size being 1.28 to 3.85 μm; the dimensions of the porous body obtained at a cooling temperature of -196°C: a substantially cylindrical shape having a diameter of 9.0 mm and a thickness of 8.0 mm, with the skeletal diameter being 0.68 to 3.85 μm and the pore size being 4.27 to 11.11 μm; in each case, VC/AN accounted for 100 wt% of the component polymer of the porous body) were obtained in the same manner as in Example 4 except for changing

the cooling temperature to -18°C or -196°C from 20°C. FIG. 9(a) shows an SEM micrograph of the porous body obtained at a cooling temperature of -18°C, and FIG. 9(b) shows an SEM micrograph of the porous body obtained at a cooling temperature of-196°C. As shown in FIGS. 9(a) and (b), it was confirmed that the higher the cooling temperature, the larger the skeletal diameter of the porous body obtained became.

Example 9

To a methanol (15 mL) solution of hydroxylamine hydrochloride (0.209 g, 3 mmol), sodium hydroxide (0.120 g, 3 mmol) was added so as to neutralize the hydrochloride. Precipitated sodium chloride was removed by filtration, and methanol (15 mL) was added to the obtained filtrate, thus giving a 0.10 M hydroxylamine methanol solution.

A porous body (a substantially cylindrical shape having a diameter of 9.0 mm and a thickness of 8.0 mm, with the skeletal diameter being 0.85 to 3.85 $\mu$m and the pore size being 1.71 to 15.38 $\mu$m; VC/AN accounted for 100 wt% of the component polymer of the porous body) was obtained in the same manner as in Example 1 except for changing the VDC/AN copolymer (vinylidene chloride : acrylonitrile = 48.0 wt% : 51.5 wt%, number-average molecular weight Mn = 140,000) to the VC/AN copolymer (vinyl chloride : acrylonitrile = 50.1 wt% : 49.4 wt%, number-average molecular weight Mn = 43,000, produced in Production Example 2), the mixed solvent of acetone/water/THF (volume ratio: 1/0.3/0.9) to a mixed solvent of acetone/water/THF (volume ratio: 1/0.2/0.4), and the cooling temperature to 4°C from 20°C.

The VC/AN copolymer porous body obtained above (0.108 g, containing CN group in amount of 0.1 mol/g, dimensions: a substantially cylindrical shape having a diameter of 9.0 mm and a thickness of 6.0 mm) was added to the 0.10 M hydroxylamine methanol solution (10 mL, 1 equivalent to nitrile groups in the VC/AN copolymer porous body). The mixture was refluxed by heating at 70°C for 24 hours to amidoximize nitrile groups on and in the vicinity of the surface of the porous body (see Scheme 1). After the heating, the porous body obtained was shaken in water (large excess) for 24 hours to be cleaned. Next, the porous body was shaken in methanol (large excess) for 24 hours to be cleaned. Finally the porous body was dried in a vacuum at room temperature, thus obtaining a VC/AN copolymer-amidoxime porous body. The introduction rate of amidoxime group was determined from the results of the elemental analysis.

FIG. 10 shows an SEM micrograph of the porous body obtained. As shown in FIG. 10, it was confirmed that the VC/AN copolymer-amidoxime porous body also was a porous body having a co-continuous structure, with the skeletal diameter being 0.85 to 3.85 $\mu$m and the pore size being 1.71 to 12.82 $\mu$m. Note that it was possible to infer that the pores had a co-continuous structure due to the fact that the shapes of the pores were identical or similar on SEM micrographs of multiple VC/AN copolymer-amidoxime porous body samples.

<Measurement of Infrared Absorption Spectrum>

Also from the fact that the peak derived from the nitrile groups declined while the peak derived from amidoxime appeared in the IR (infrared absorption spectrum) spectrum of the porous body obtained, it was confirmed that the amidoximization occurred (see Table 11). (B) / (A) of the VC/AN copolymer-amidoxime porous body obtained was 3.25, where (A) represents the peak height of the infrared absorption spectrum of the vinyl chloride-based copolymer-amidoxime porous body at 2262 $cm^{-1}$ and (B) represents the peak height of the infrared absorption spectrum of the VC/AN copolymer-amidoxime porous body at 1652 $cm^{-1}$.

[Chemical Formula 1]

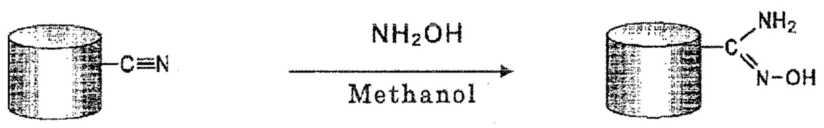


70°C, 24h

Scheme 1

Example 10

A VC/AN copolymer-amidoxime porous body (a substantially cylindrical shape having a diameter of 9.0 mm and a thickness 8.0 mm, with the skeletal diameter being 1.28 to 4.27 $\mu$m and the pore size being 2.14 to 12.0 $\mu$m) was obtained in the same manner as in Example 9 except for using a 0.6 M hydroxylamine methanol solution (6 equivalents

to the nitrile groups in the VC/AN copolymer porous body) in place of the 0.10 M hydroxylamine methanol solution. FIG. 12 shows an SEM micrograph of the porous body obtained. FIG. 13 shows the IR (infrared absorption spectrum) spectrum of the porous body obtained. (B)/(A) of the VC/AN copolymer-amidoxime porous body obtained was 430.

Example 11

A VC/AN copolymer-amidoxime porous body (a substantially cylindrical shape having a diameter of 9.0 mm and a thickness of 8.0 mm) was obtained in the same manner as in Example 9 except for changing the reaction time to 3 hours from 24 hours.

Example 12

A VC/AN copolymer-amidoxime porous body (a substantially cylindrical shape having a diameter of 9.0 mm and a thickness of 8.0 mm) was obtained in the same manner as in Example 10 except for changing the reaction time to 3 hours from 24 hours.

Example 13

A VC/AN copolymer-amidoxime porous body (a substantially cylindrical shape having a diameter of 9.0 mm and a thickness of 8.0 mm) was obtained in the same manner as in Example 9 except for using a 0.01 M hydroxylamine methanol solution (0.1 equivalent to the nitrile groups in the VC/AN copolymer porous body) in place of the 0.10M hydroxylamine methanol solution.

Example 14

A VC/AN copolymer-amidoxime porous body (a substantially cylindrical shape having a diameter of 9.0 mm and a thickness of 8.0 mm) was obtained in the same manner as in Example 13 except for changing the reaction time to 3 hours from 24 hours.

Example 15

A VC/AN copolymer-amidoxime porous body (a substantially cylindrical shape having a diameter of 9.0 mm and a thickness of 8.0 mm) was obtained in the same manner as in Example 9 except for using a 1.2 M hydroxylamine methanol solution (0.1 equivalent to the nitrile groups in the VC/AN copolymer porous body) in place of the 0.10 M hydroxylamine methanol solution. C/N of the obtained VC/AN copolymer amidoxime porous body obtained from an elemental analysis was 2.62.

Example 16

A VC/AN copolymer-amidoxime porous body (a substantially cylindrical shape having a diameter of 9.0 mm and a thickness of 8.0 mm) was obtained in the same manner as in Example 9 except for using a 1.2 M hydroxylamine methanol solution (0.1 equivalent to the nitrile groups in the VC/AN copolymer porous body) in place of the 0 10 M hydroxylamine methanol solution. C/N of the obtained VC/AN copolymer amidoxime porous body obtained from an elemental analysis was 2.57.

Table 3 provides the results of the elemental analysis of the VC/AN copolymer-amidoxime porous bodies obtained m Examples 9 to 14.

[TABLE 3]

Table 3' $C_{4.71}H_{5.60}NCl_{0.88} \rightarrow C_{4\cdot 71}H_{8.60}N_2Cl_{0.88}O$

| (when reaction proceed 100%) | | | | |
|---|---|---|---|---|
| | | $N_xCl_yO_z$ in $C_{4.71}H_aN_xCl_yO_z$ | | |
| | | Concentration of $NH_2OH$ (mol/L) | | |
| | | 0.01 | 01 | 0.6 |
| Reaction time | 3 | $N_{1.00}Cl_{0.87}O_{0.06}$ (Ex. 14) | $N_{1.22}Cl_{0.73}O_{0.72}$ (Ex. 11) | $N_{1.76}Cl_{0.34}O_{2.12}$ (Ex. 12) |
| | 24 | $N_{1.03}Cl_{0.82}O_{0.17}$ (Ex. 13) | $N_{1.29}Cl_{0.54}O_{1.07}$ (Ex. 9) | $N_{1.75}Cl_{0.12}O_{2.35}$ (Ex. 10) |

The composition formula of each VC/AN copolymer-amidoxnne porous body obtained from the results of the elemental analysis was represented as $C_{4.71}H_aCl_yO_z$, and the percentage of amidoximization (which indicates the degree of amidoximazation of the nitrile groups m the VC/AN copolymer porous body) was calculated using the following formula.

$$\text{Percentage of amidoximization} = (x - 1) \times 100\ (\%)$$

where x is the subscript of Nx m the formula obtained from the elemental analysis.

[TABLE 4]

| Example | Percentage of amidoximization (mol%) |
|---|---|
| 9 | 29 |
| 10 | 75 |
| 11 | 22 |
| 12 | 76 |
| 13 | 3 |
| 14 | 0 |
| 15 | 80 |
| 16 | 83 |

From the results provided in Tables 3 and 4, it was confirmed that the porous bodies obtained in Examples 9 to 14 were VC/AN copolymer-amidoxime porous bodies Further, from the results provided in Tables 3 and 4, it was inferred that chlorine atoms in the VC/AN copolymer-porous bodies were also replaced with hydroxylamine in addition to the mtrile groups.

Note that a polyvinyl chloride polymer was refluxed by heating at 70°C for 24 hours in the 0.10 M hydroxylamine methanol solution (8.8 mL (1 equivalent to chlorine groups in VC) but the polyvinyl chloride polymer was not amidoximized.

<Measurement of Adsorption Amount of Metal Ion by Batch Method>

Measurement of Absorption Amount of Copper(II) Ion

(a) The VC/AN copolymer-amidoxime porous body (25 mg) obtained in Example 11 was stirred in copper(II) sulfate pentahydrate aqueous solutions (10 mmol/L, 10 mL, pH 1 (0.1M hydrochloric acid solution), pH 3 (potassium phthalate buffer solution) and pH 5 (0.1 M acetate buffer solution)) for 24 hours at room temperature. The absorbance of each stirred solution at 765 nm was measured. From the absorbance obtained, a change in the concentration of each copper(II) sulfate pentahydrate aqueous solution was calculated. From the difference in the concentration of each copper(II) sulfate pentahydrate aqueous solution between before and after the stirring, the amount of copper(II) ion adsorbed by the VC/AN copolymer-amidoxime porous body was calculated.

(b) A change in the concentration of each stirred copper(II) sulfate pentahydrate aqueous solution was calculated in the same manner as in (a) above except for using the VC/AN copolymer-amidoxime porous body obtained in Example 12 in place of the VC/AN copolymer-amidoxime porous body obtained in Example 11. From the difference in the concentration of each copper(II) sulfate pentahydrate aqueous solution between before and after the stirring, the amount of copper(II) ion adsorbed by the vinyl chloride-based copolymer-amidoxime porous body was calculated.
(c) A porous body (a substantially cylindrical shape having a diameter of 9.0 mm and a thickness of 8.0 mm, with the skeletal diameter being 0.85 to 3.85 μm and the pore diameter being 1.71 to 15.38 μm; VC/AN accounted for 100 wt% of the component polymer of the porous body) was obtained in the same manner as in Example 1 except for changing the VDC/AN copolymer (vinylidene chloride : acrylonitrile = 48.0 wt% : 51.5 wt%, number-average molecular weight Mn = 140,000) to the VC/AN copolymer (vinyl chloride : acrylonitrile = 50.1 wt%: 49.4 wt%, number-average molecular weight Mn = 43,000, produced in Production Example 2) and the mixed solvent of acetone/water/THF (volume ratio: 1/0.3/0.9) to a mixed solvent of acetone/water/THF (volume ratio: 1/0.2/0.4), and the cooling temperature to 4°C from 20°C. A change in the concentration of each stirred copper(II) sulfate pentahydrate aqueous solution was calculated in the same manner as in (a) above except for using the VC/AN copolymer porous body obtained above in place of the VC/AN-amidoxime porous body obtained in Example 11. From the difference in the concentration of each copper (II) sulfate pentahydrate aqueous solution between before and after the stirring, the amount of copper (II) ion adsorbed by the vinyl chloride-based copolymer-amidoxime porous body was calculated. This example is referred to as Reference Example 1. Table 5 provides the results obtained in (a) to (c).

[TABLE 5]

| | Introduction rate of amidoxime group (mmol/g of porous body) | Adsorption amount of copper(II) ion (mmol/g of porous body) | | |
|---|---|---|---|---|
| | | pH 1 | pH 3 | pH 5 |
| Ref. Ex. 1 | - | 0 | 0 | 0 |
| Ex. 11 | 1.91 | 0 | 0.3 | 0.63 |
| Ex. 12 | 6.6 | 0 | 0.95 | 2.52 |

As shown in Table 5, it was confirmed that the VC/AN copolymer-amidoxime porous body of the present invention had the capability of adsorbing a copper(II) ion.

Example 17

A porous body was obtain in the same manner as in Example 4 except for changing the mixed solvent of acetone/water/THF (volume ratio: 1/0.3/0.9) to a mixed solvent of acetone/water/1,4-dioxane (volume ratio: 1/0.2/0.4).

Example 18

A porous body was obtain in the same manner as in Example 17 except for changing the mixed solvent of acetone/water/1,4-dioxane (volume ratio: 1/0.2/0.4) to a mixed solvent of acetone/water/1,4-dioxane (volume ratio: 1/0.2/0.5).

Example 19

A porous body was obtain in the same manner as in Example 17 except for changing the mixed solvent of acetone/water/1,4-dioxane (volume ratio: 1/0.2/0.4) to a mixed solvent of acetone/water/1,4-dioxane (volume ratio: 1/0.2/0.6).

Example 20

A porous body was obtain in the same manner as in Example 17 except for changing the mixed solvent of acetone/water/1,4-dioxane (volume ratio: 1/0.2/0.4) to a mixed solvent of acetone/water/1,4-dioxane (volume ratio:

1/0.3/1.4).

Example 21

A porous body was obtain in the same manner as in Example 17 except for changing the mixed solvent of acetone/water/1,4-dioxane (volume ratio: 1/0.2/0.4) to a mixed solvent of acetone/water/1,4-dioxane (volume ratio: 1/0.3/1.5).

Example 22

A porous body was obtain in the same manner as in Example 17 except for changing the mixed solvent of acetone/water/1,4-dioxane (volume ratio: 1/0.2/0.4) to a mixed solvent of acetone/water/1,4-dioxane (volume ratio: 1/0.3/1.6).

Industrial Applicability

Since a VC/AN copolymer-amidoxime porous body obtained by the method of the present invention has excellent chemical resistance, acid resistance, alkali resistance and flame retardancy, includes continuous pores and is highly capable of adsorbing metal ions, there is a possibility that the porous body may be applied as a filter, an adsorbent, etc.

**Claims**

1. A vinyl chloride-based copolymer porous body comprising a vinyl chloride-based copolymer as the main component, wherein the vinyl chloride-based copolymer porous body has continuous pores having a pore size of 0.1 to 40 μm, the pores have a skeletal diameter of 0.1 to 20 μm, and the vinyl chloride-based copolymer porous body has a thickness of 1 mm or more.

2. The vinyl chloride-based copolymer porous body according to claim 1, wherein the vinyl chloride-based copolymer contains a vinyl chloride-based monomer in an amount of 70 to 30 parts by weight and acrylonitrile in an amount of 30 to 70 parts by weight.

3. The vinyl chloride-based copolymer porous body according to claim 2, wherein the vinyl chloride-based copolymer further contains a vinyl-based monomer copolymerizable with the vinyl chloride-based monomer and acrylonitrile in an amount of more than 0 parts by weight and 10 parts by weight or less.

4. The vinyl chloride-based copolymer porous body according to any one of claims 1 to 3, wherein the vinyl chloride-based monomer is vinyl chloride or vinylidene chloride.

5. An amidoxime-modified vinyl chloride-based copolymer porous body obtained by reacting the porous body according to any one of claims 1 to 4 with hydroxylamine to convert some of nitrile groups of the vinyl chloride-based copolymer porous body into amidoxime groups.

6. The amidoxime-modified vinyl chloride-based copolymer porous body according to claim 5, wherein the vinyl chloride-based copolymer porous body according to any one of claims 1 to 4 is obtained by a method comprising the steps of heating and dissolving the vinyl chloride-based copolymer in a solvent to obtain a vinyl chloride-based copolymer solution;
cooling the vinyl chloride-based copolymer solution to obtain a precipitated product; and
immersing the product in another solvent to replace the solvent with the another solvent to obtain the vinyl chloride-based copolymer porous body that is monolithic, has a thickness of 1 mm or more and contains the vinyl chloride-based copolymer as the main component,
wherein the solvent contains a poor solvent for the vinyl chloride-based copolymer and a good solvent for the vinyl chloride-based copolymer,
the poor solvent is at least one selected from the group consisting of water, tetrahydrofurane, 1,4-dioxane, acetonitrile, ethylene glycol, methanol, ethanol, isopropanol, ethylene glycol, and glycerin, and
the good solvent is at least one selected from the group consisting of acetone, dimethyl sulfoxide, dimethyl formamide, dimethyl acetamide, and N-methylpyrrolidone.

7. The amidoxime-modified vinyl chloride-based copolymer porous body according to claim 6, wherein the solvent when being 100 vol% has a good solvent content of 15 to 85 vol%.

8. The amidoxime-modified vinyl chloride-based copolymer porous body according to claim 6 or 7, wherein when the poor solvent is a combination of water and at least one poor solvent other than water selected from the group consisting of tetrahydrofurane, 1,4-dioxane, acetonitrile, ethylene glycol, methanol, ethanol, isopropanol, ethylene glycol, and glycerin, the ratio of water : poor solvent other than water is $5X - 0.7 < Y < 5X - 0.5$ (wherein, X is the relative volume of water where the volume of acetone is 1 and Y is the relative volume of the poor solvent other than water where the volume of acetone is 1).

9. The amidoxime-modified vinyl chloride-based copolymer porous body according to any one of claims 6 to 8, wherein the vinyl chloride-based copolymer is a polymer containing a vinyl chloride-based monomer in an amount of 30 wt% or more and 70 wt% or less.

10. The amidoxime-modified vinyl chloride-based copolymer porous body according to any one of claims 6 to 9, wherein the temperature at which the vinyl chloride-based copolymer solution is cooled is -20 to 60°C.

11. The amidoxime-modified vinyl chloride-based copolymer porous body according to any one of claims 5 to 10, wherein 2 to 98 mol% of the nitrile groups of the vinyl chloride-based copolymer porous body are amidoximized.

12. The amidoxime-modified vinyl chloride-based copolymer porous body according to any one of claims 5 to 11 for adsorbing a metal ion and an iodine ion and iodine.

13. The amidoxime-modified vinyl chloride-based copolymer porous body according to claim 12, wherein the metal is selected from the group consisting of copper, iron, nickel, vanadium, indium, gallium, mercury, silver, lead, uranium, plutonium, cesium, barium, lanthanum, thallium and strontium.

14. A column for adsorbing a metal ion and an iodine ion and iodine, wherein the column is filled with the amidoxime-modified vinyl chloride-based copolymer porous body according to any one of claims 5 to 13.

15. The column according to claim 14, wherein the metal is selected from the group consisting of copper, iron, nickel, vanadium, indium, gallium, mercury, silver, lead, uranium, plutonium, cesium, barium, lanthanum, thallium, and strontium.

16. A metal adsorption method for adsorbing a metal ion and an iodine ion and iodine using the amidoxime-modified vinyl chloride-based copolymer porous body according to any one of claims 5 to 11.

17. The metal adsorption method according to claim 16, wherein the metal is selected from the group consisting of copper, iron, nickel, vanadium, indium, gallium, mercury, silver, lead, uranium, plutonium, cesium, barium, lanthanum, thallium, and strontium.

18. A method for producing a vinyl chloride-based copolymer porous body, comprising the steps of
heating and dissolving a vinyl chloride-based copolymer in a solvent to obtain a vinyl chloride-based copolymer solution;
cooling the vinyl chloride-based copolymer solution to obtain a precipitated product; and
immersing the product in another solvent to replace the solvent with the another solvent to obtain a vinyl chloride-based copolymer porous body that is monolithic, has a thickness of 1 mm or more and contains the vinyl chloride-based copolymer,
wherein the solvent contains a poor solvent for the vinyl chloride-based copolymer and a good solvent for the vinyl chloride-based copolymer,
the poor solvent is at least one selected from the group consisting of water, tetrahydrofurane, 1,4-dioxane, acetonitrile, ethylene glycol, methanol, ethanol, isopropanol, ethylene glycol, and glycerin, and
the good solvent is at least one selected from the group consisting of acetone, dimethyl sulfoxide, dimethyl formamide, dimethyl acetamide, and N-methylpyrrolidone.

19. The method for producing a vinyl chloride-based copolymer porous body according to claim 18, wherein the solvent when being 100 vol% has a good solvent content of 15 to 85 vol%.

**20.** The method for producing a vinyl chloride-based copolymer porous body according to claim 18 or 19, wherein when the poor solvent is a combination of water and at least one poor solvent other than water selected from the group consisting of tetrahydrofurane, 1,4-dioxane, acetonitrile, ethylene glycol, methanol, ethanol, isopropanol, ethylene glycol, and glycerin, the ratio of water : poor solvent other than water is $5X - 0.7 < Y < 5X - 0.5$ (wherein, X is the relative volume of water where the volume of acetone is 1, and Y is the relative volume of the poor solvent other than water where the volume of acetone is 1).

**21.** The method for producing a vinyl chloride-based copolymer porous body according to any one of claims 18 to 20, wherein the vinyl chloride-based copolymer is a polymer containing a vinyl chloride-based monomer in an amount of 30 wt% or more and 70 wt% or less.

**22.** The method for producing an amidoxime-modified vinyl chloride-based copolymer porous body according to any one of claims 18 to 21, wherein the temperature at which the amidoxime-modified vinyl chloride-based copolymer solution is cooled is -20 to 60°C.

**23.** A method for producing an amidoxime-modified vinyl chloride-based copolymer porous body, the method comprising the step of reacting the vinyl chloride-based copolymer porous body according to any one of claims 1 to 3 or a vinyl chloride-based copolymer porous body obtained by the production method according to any one of claims 18 to 22 witch hydroxylamine to convert some of nitride groups of the vinyl chloride-based copolymer porous body into amidoxime groups.

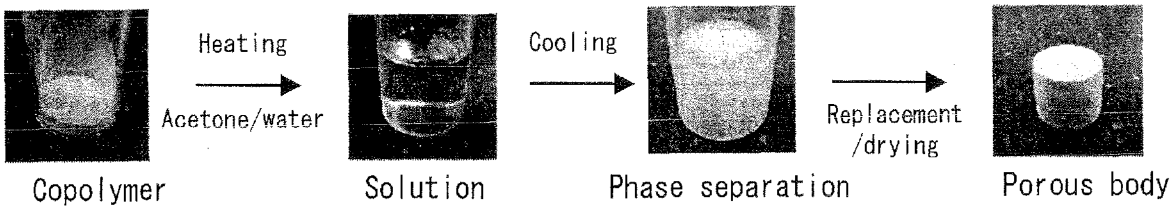
Heating
Acetone/water
Cooling
Replacement
/drying
Copolymer
Solution
Phase separation
Porous body

FIG. 1

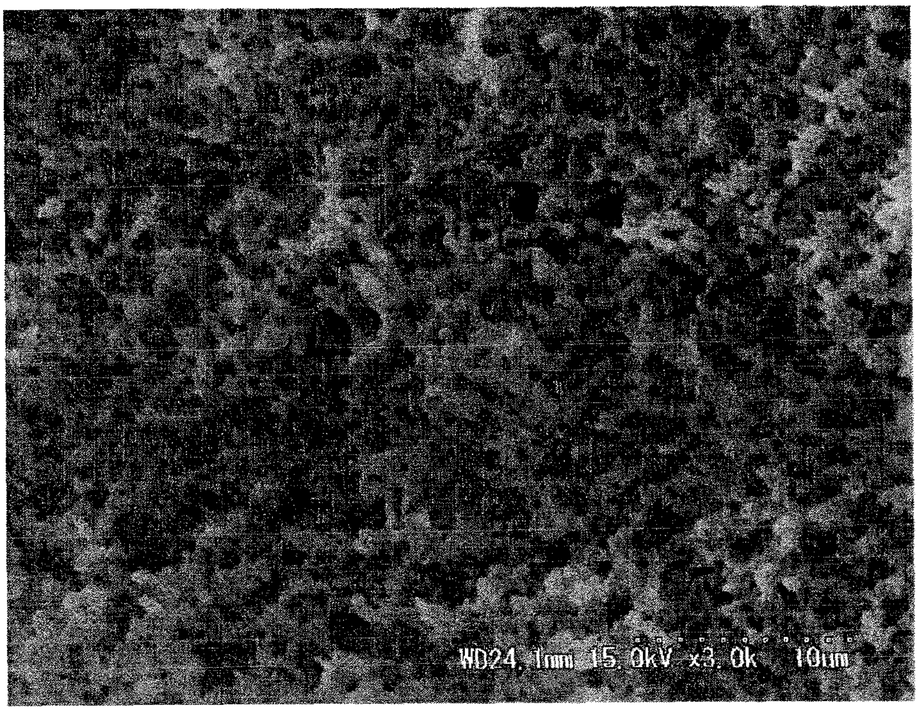
WD24.1mm 15.0kV x3.0k 10um

FIG. 2

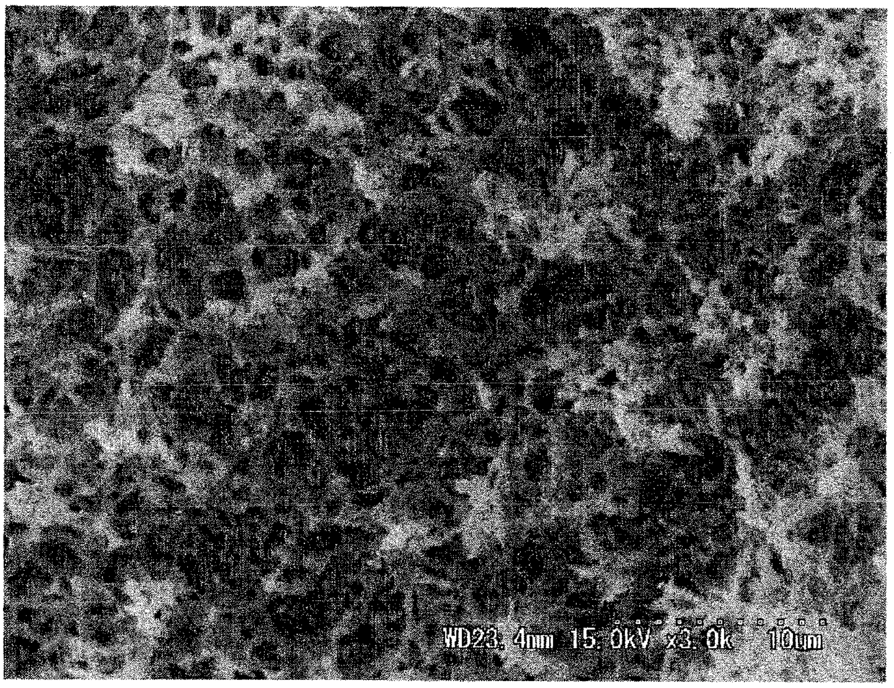


FIG. 3(a)

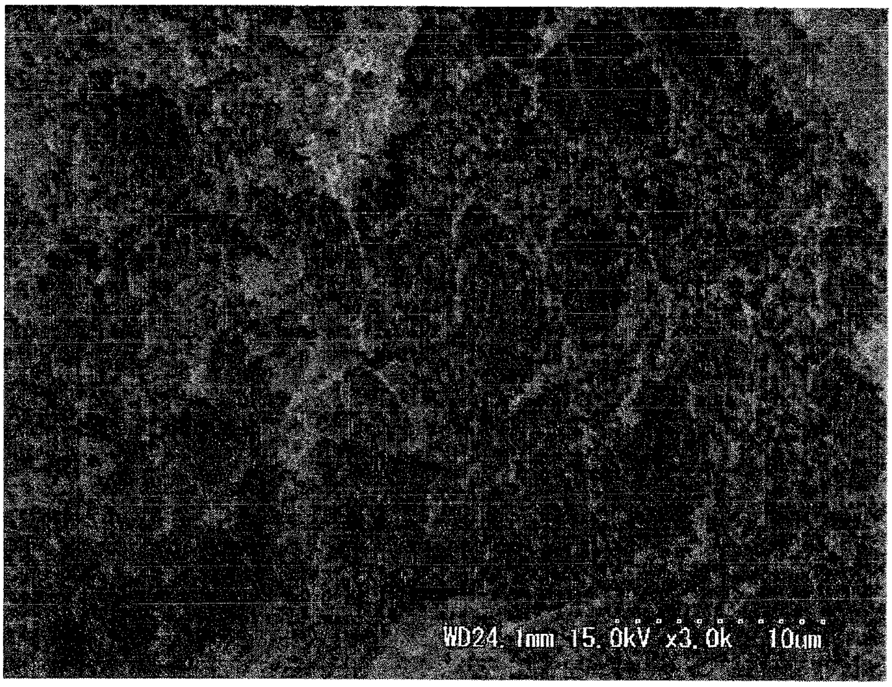


FIG. 3(b)

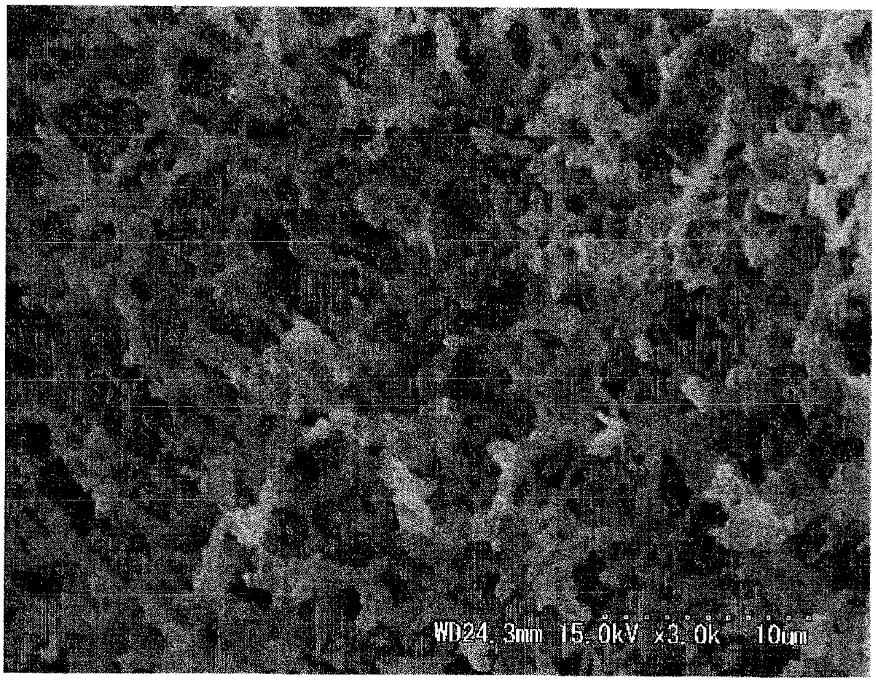


FIG. 4(a)

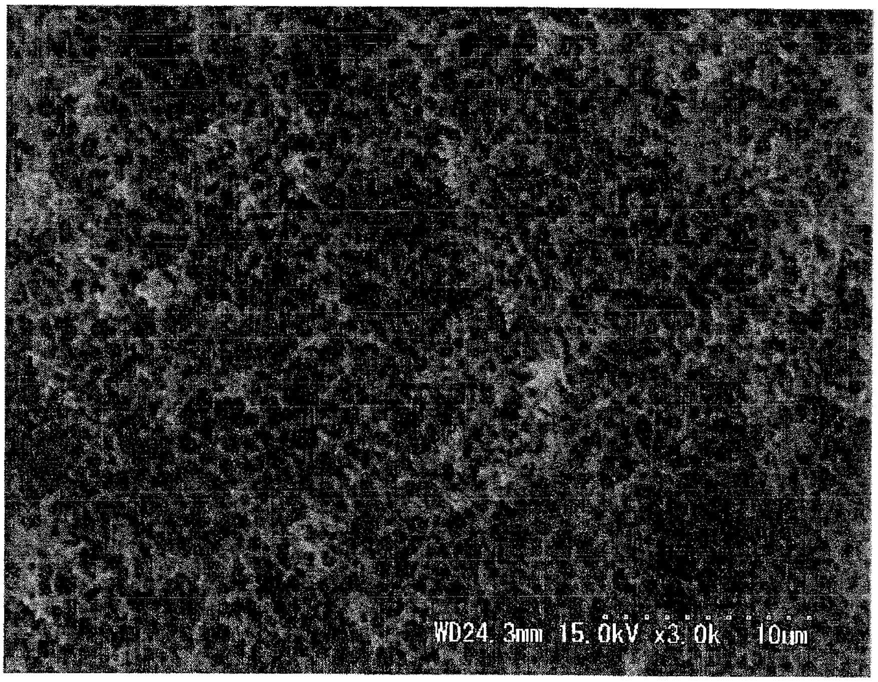


FIG. 4(b)

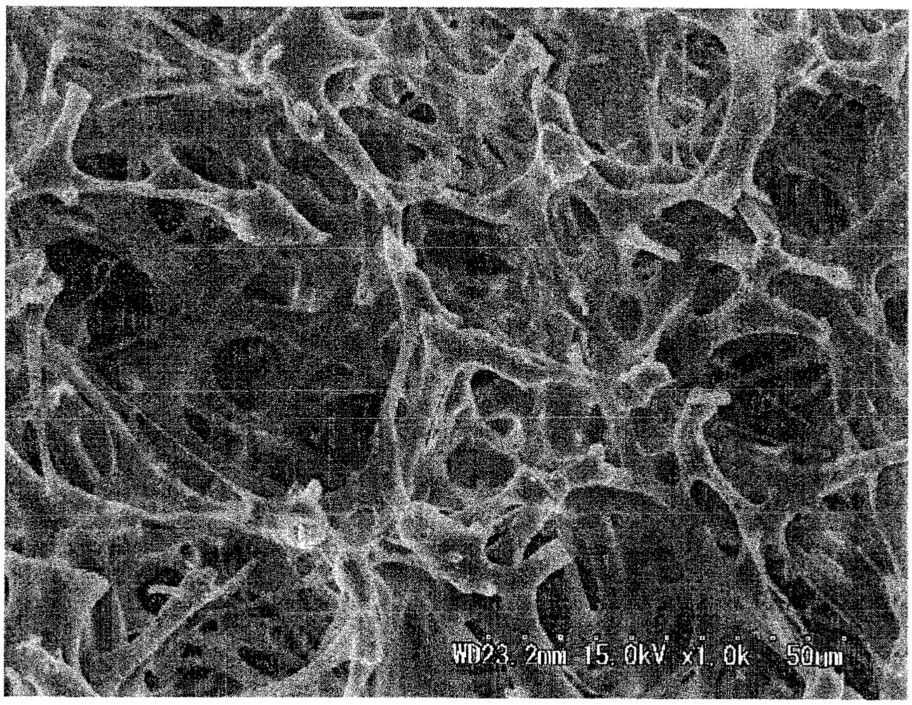


FIG. 5

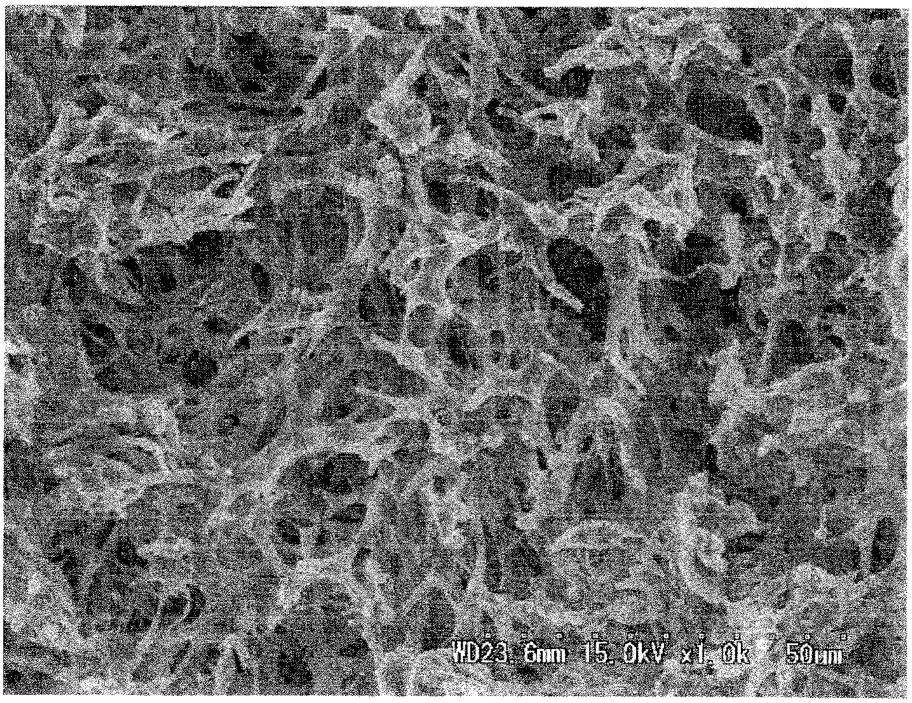


FIG. 6

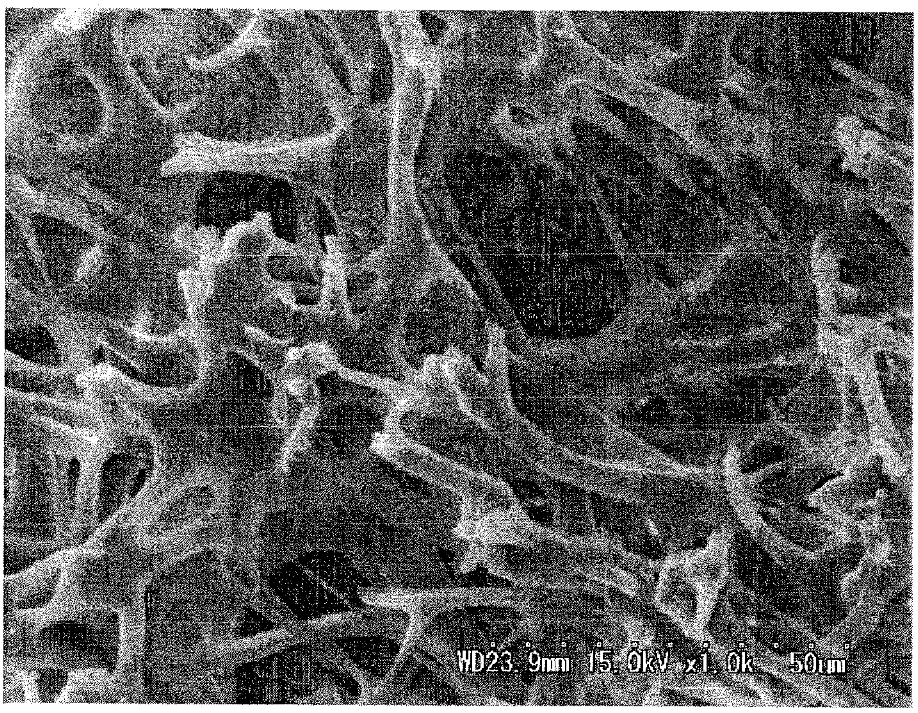


FIG. 7

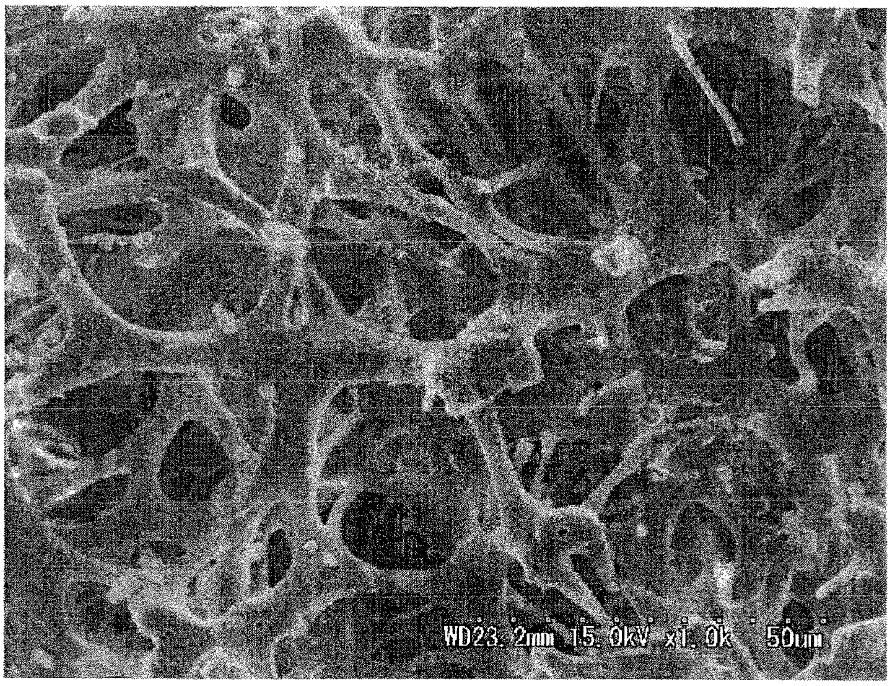


FIG. 8(a)

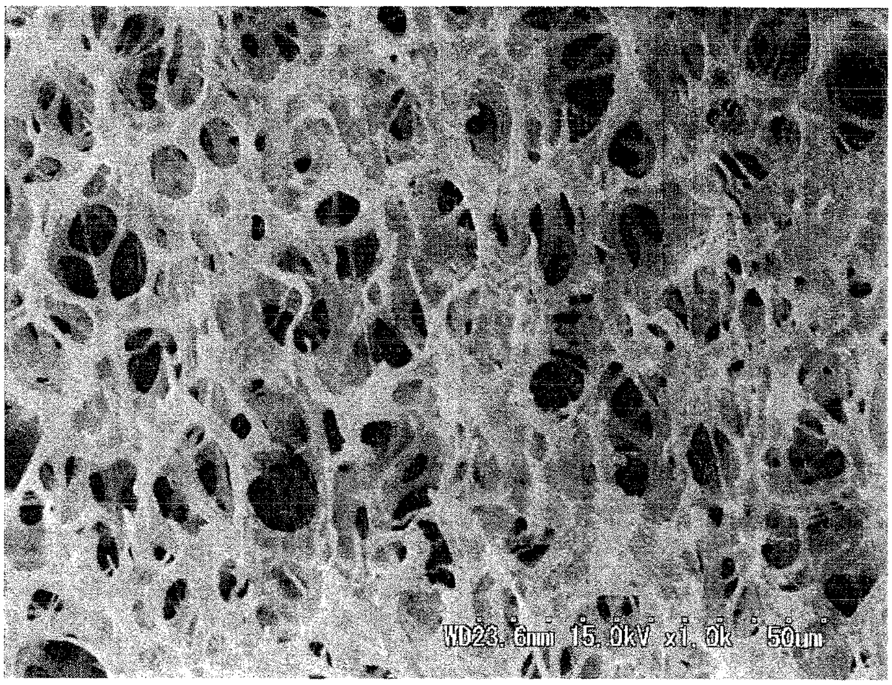


FIG. 8(b)

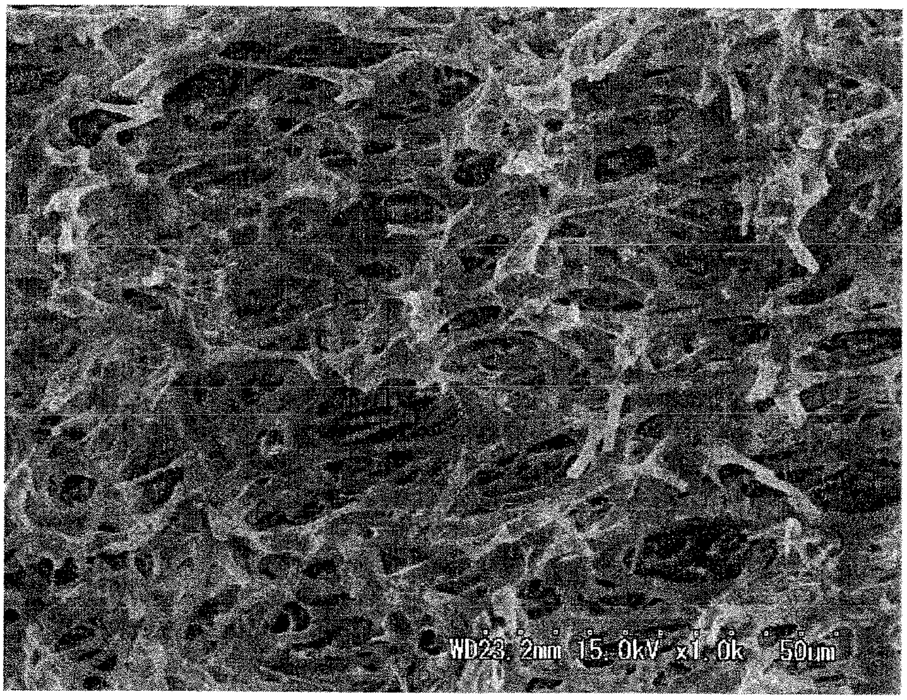


FIG. 9(a)

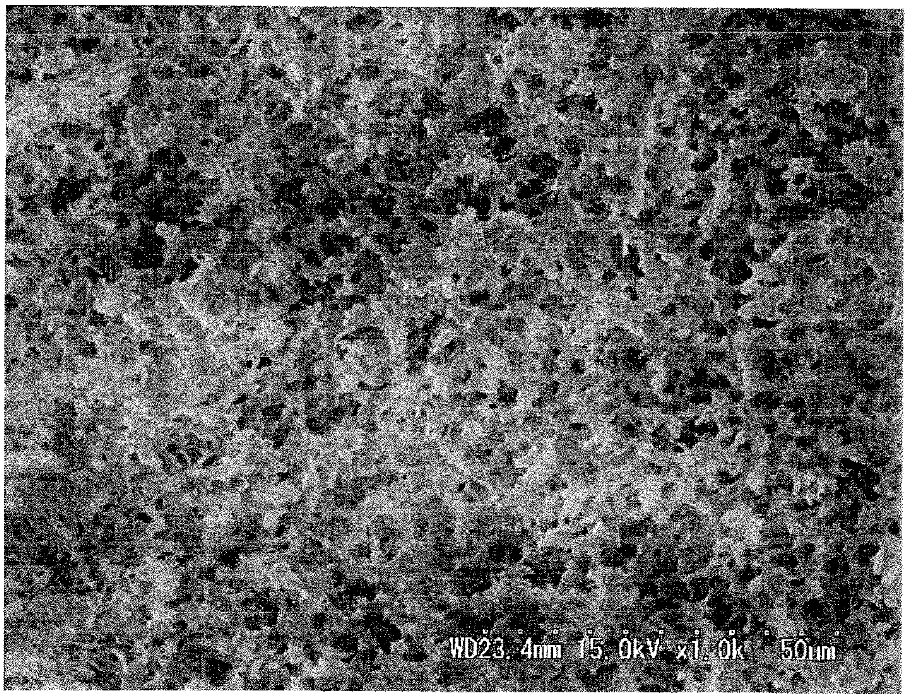


FIG. 9(b)

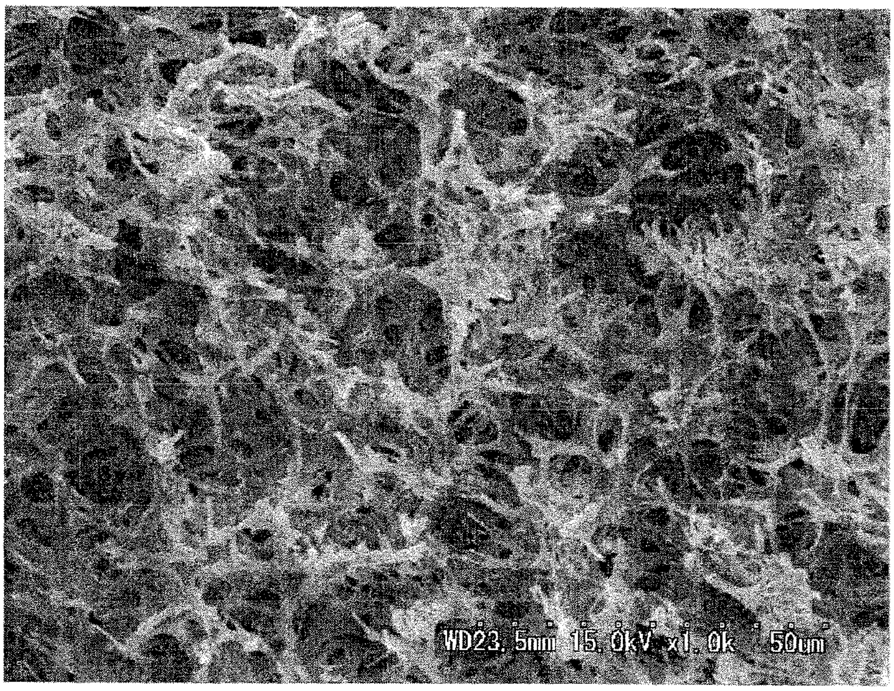
WD23.5mm 15.0kV x1.0k 50um

FIG. 10

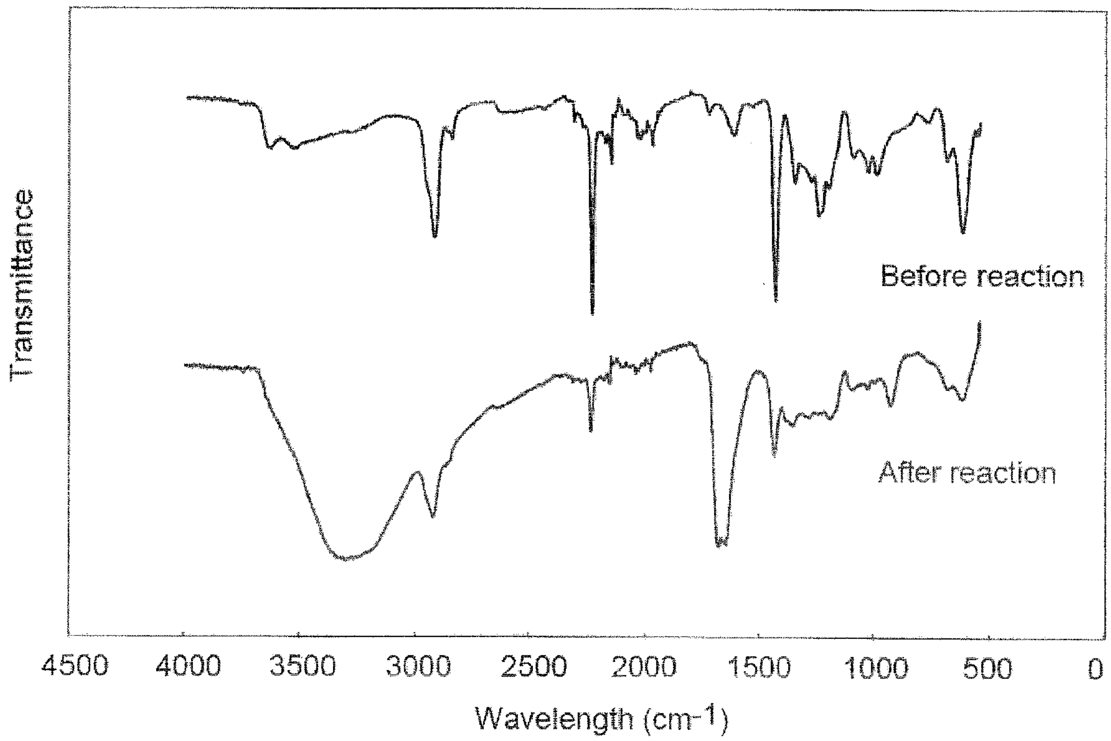
Transmittance
Before reaction
After reaction
4500
4000
3500
3000
2500
2000
1500
1000
500
0
Wavelength (cm-1)

FIG. 11

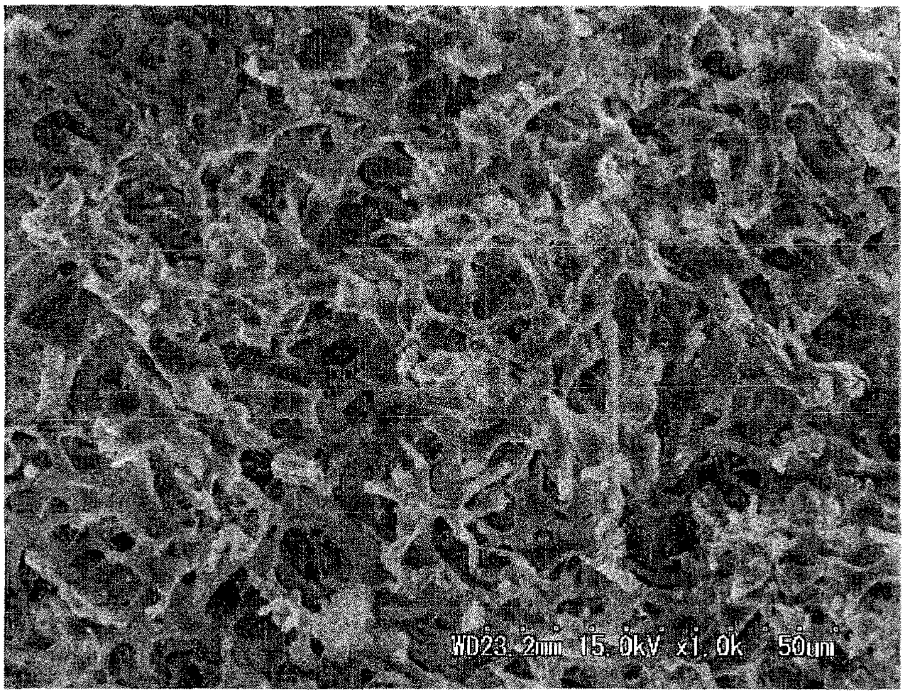
WD23.2mm 15.0kV x1.0k 50um

FIG. 12

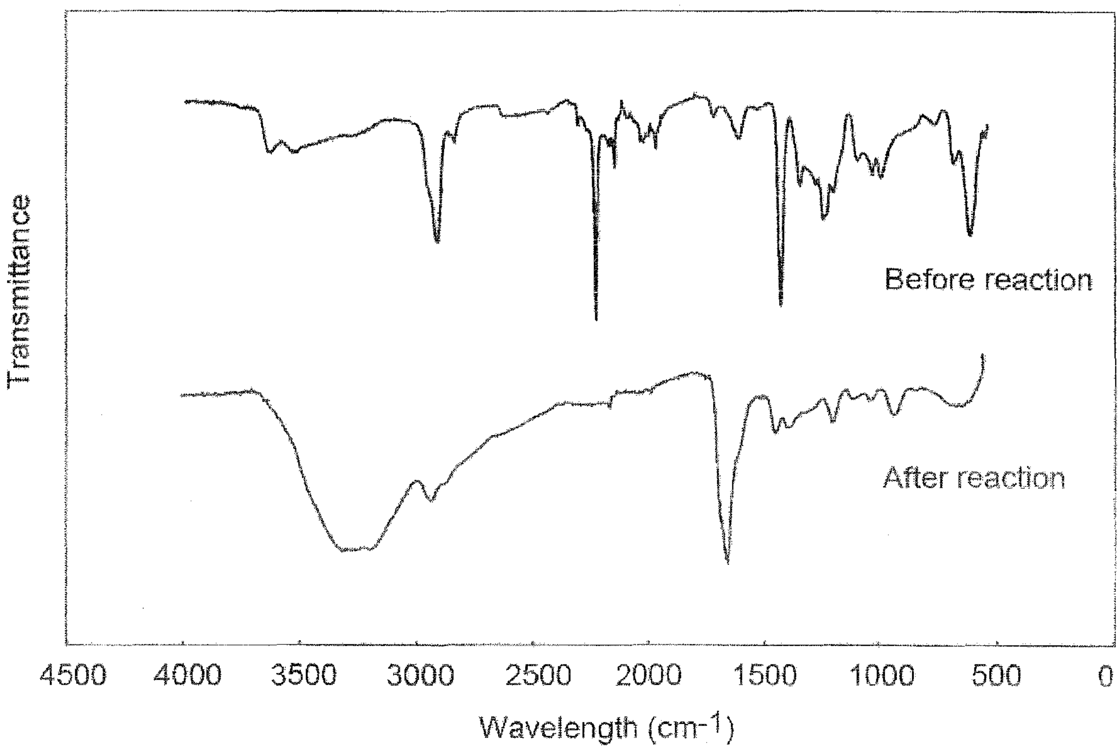
Transmittance
Before reaction
After reaction
4500
4000
3500
3000
2500
2000
1500
1000
500
0
Wavelength (cm-1)

FIG. 13

**INTERNATIONAL SEARCH REPORT**

International application No. PCT/JP2012/078837

A. CLASSIFICATION OF SUBJECT MATTER
*C08J9/28*(2006.01)i, *C08F8/32*(2006.01)i

According to International Patent Classification (IPC) or to both national classification and IPC

B. FIELDS SEARCHED

Minimum documentation searched (classification system followed by classification symbols)
C08J9/00-9/42, C08F8/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 57-090028 A (Kaneka Corp.), 04 June 1982 (04.06.1982), claims; page 2, upper left column to page 2, upper right column (Family: none) | 1-5,11-17,23<br>6-10,18-22 |
| Y<br>A | JP 2010-260952 A (Osaka University), 18 November 2010 (18.11.2010), claims; paragraph [0025] & WO 2010/128627 A1 | 1-5,11-17,23<br>6-10,18-22 |
| Y | JP 56-048214 A (Aligena AG.), 01 May 1981 (01.05.1981), claims; page 4, lower right column; page 10, lower left column; page 13, lower left column & US 4584103 A & EP 0025973 A2 | 5,11-17,23 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 February, 2013 (01.02.13) | 12 February, 2013 (12.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/078837

C (Continuation). DOCUMENTS CONSIDERED TO BE RELEVANT

| Category* | Citation of document, with indication, where appropriate, of the relevant passages | Relevant to claim No. |
|---|---|---|
| Y | JP 63-166436 A (Sumitomo Chemical Co., Ltd.), 09 July 1988 (09.07.1988), page 1, right column (Family: none) | 5,11-17,23 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11273452 A